# EUROPÄISCHE PATENTANMELDUNG

(11) **EP 1 707 874 A1**
(43) Veröffentlichungstag der Anmeldung: **04.10.2006**
(21) Anmeldenummer: 05005919.5
(22) Anmeldetag: 18.03.2005
(51) Int. Cl.: F23J 15/04

(54) **Rauchgasreinigungsvorrichtung**

(71) Anmelder: Lurgi Lentjes AG, 40549 Düsseldorf (DE)
(72) Erfinder: Theo Risse, 59368 Werne (DE); Christian Moser, 45359 Essen (DE)
(74) Vertreter: Stenger, Watzke & Ring

(57) **Zusammenfassung**

Rauchgasreinigungsvorrichtung mit einem Waschflüssigkeitssumpf (16), der aufweist:
eine Oxidationseinrichtung (24) mit wenigstens einer Rohrleitung (21) und darin vorgesehenen Sauerstoffauslaßöffnungen (22) zur Einleitung von Sauerstoff in den Waschflüssigkeitssumpf (16) und
Zirkulationsmittel (28) zum Zirkulieren der im Waschflüssigkeitssumpf (16) vorhandenen Waschflüssigkeit innerhalb des Waschflüssigkeitssumpfes (16),
dadurch gekennzeichnet, daß
die Sauerstoffauslaßöffnungen (22) der wenigstens einen Rohrleitung (21) der Oxidationseinrichtung (24) einen Durchmesser von zumindest 9 mm aufweisen.

## Beschreibung

Die vorliegende Erfindung bezieht sich auf eine Rauchgasreinigungsvorrichtung zur Reinigung von Rauchgas, insbesondere zur Entschwefelung von Abgas eines Kohlekraftwerks oder dergleichen.

Derartige Rauchgasreinigungsvorrichtung sind im Stand der Technik bereits bekannt. Sie umfassen normalerweise einen Waschturm mit Waschflüssigkeitsdüsen, die häufig in mehreren Ebenen angeordnet sind, ein Waschflüssigkeitssumpf, in dem Waschflüssigkeit gesammelt wird, und ein Absorptionsbereich, der sich in einem Behälterabschnitt des Waschturms vom Waschflüssigkeitssumpf bis zur oberen Waschflüssigkeitsdüsenebene erstreckt. Rauchgas wird in einen unteren Abschnitt des Absorptionsbereiches in den Waschturm eingeleitet, strömt von dort aufwärts und verläßt den Waschturm durch eine oberhalb der Waschflüssigkeitsdüsen vorgesehene Austrittsöffnung. Auf seinem Weg durch den Waschturm kommt das Rauchgas mit aus den Waschflüssigkeitsdüsen austretender Waschflüssigkeit in Kontakt und wird gereinigt, was nachfolgend näher beschrieben ist.

Eine derartige Reinigungsvorrichtung ist beispielsweise aus der DE-A-100 58 548 bekannt. Die Waschflüssigkeit umfaßt neben Wasser vorzugsweise Erdalkalien, die mit den im Rauchgas vorhandenen Schwefeloxiden und mit den im Waschturm erzeugten Schwefeloxiden reagieren. Es wird insbesondere Kalk in Form von Kalziumoxid, Kalziumhydroxid, Kalziumcarbonat oder dergleichen verwendet.

Die Erdalkalien reagieren im Absorptionsbereich des Waschturms mit den im Rauchgas vorhandenen Schwefeloxiden im wesentlichen zu Kalziumsulfit, das in der Waschflüssigkeit gebunden wird. Das Rauchgas wird auf diese Weise von den unerwünschten Schwefeloxiden gereinigt und tritt anschließend aus der Reinigungsvorrichtung aus. Die Waschflüssigkeit hingegen gelangt zusammen mit den in dieser schwebend gehaltenen Kalziumsulfitteilchen in den Waschflüssigkeitssumpf und wird gesammelt.

Aus der im Waschflüssigkeitssumpf gesammelten Waschflüssigkeit soll Kalziumsulfat gewonnen werden. Kalziumsulfat weist ähnlich vorteilhafte Eigenschaften wie Naturgips auf und wird meist zu verschiedenen Werkstoffen weiterverarbeitet, insbesondere zu Bauwerkstoffen.

Um die Kalziumsulfitteilchen, die durch die Reinigung des Rauchgases im Absorptionsbereich des Waschturms entstanden sind, in Kalziumsulfatteilchen umzuwandeln, ist es bekannt, im Waschflüssigkeitssumpf eine Oxidationseinrichtung vorzusehen, die Sauerstoff in Form von Luft oder dergleichen in den Waschflüssigkeitssumpf einbringt. Durch die Reaktion des Sauerstoffs mit den Kalziumsulfiten wird Kalziumsulfat erzeugt. Um diese Reaktion zu optimieren, wird es bevorzugt, daß die Oxidationseinrichtung sehr kleine Luftblasen (möglichst < 1 mm Durchmesser) in hoher Anzahl erzeugt. Kleine Luftblasen haben den Vorteil, daß sie eine längere Aufenthaltszeit als große Luftblasen im Waschflüssigkeitssumpf haben, wodurch der Eintritt von Sauerstoff in die Waschflüssigkeit verbessert wird. Ferner führt die Verkleinerung der Luftblasendurchmesser und die Erhöhung der Blasenanzahl zu einer Vergrößerung der Grenzfläche zwischen den Sauerstoffblasen und der Waschflüssigkeit und somit zu einem besseren Sauerstoffaustausch durch Diffusion und/oder Lösung an den Grenzflächen zwischen den Kalziumsulfitteilchen und den Sauerstoffblasen. Schließlich erhöht die verlängerte Aufenthaltszeit den Blasenweg und damit die Kontaktzeit.

Mit der Erzeugung sehr kleiner Sauerstoffblasen ist jedoch der Nachteil verbunden, daß sich die entsprechend kleinen Sauerstoffauslaßöffnungen der Oxidationseinrichtung verhältnismäßig schnell zusetzen, wodurch der Wartungsaufwand erhöht wird.

Um ein Zusetzen derart kleiner Sauerstoffauslaßöffnungen der Oxidationseinrichtung zu verhindern, schlägt die DE-A-43 29 427 einen Waschturm für eine Anlage zur Rauchgasentschwefelung vor, Strömungseinbauten im Waschflüssigkeitssumpf des Waschturms anzuordnen und im Bereich der höchsten Strömungsgeschwindigkeit der Strömungseinbauten die Rohrleitungen mit den Sauerstoffaustrittsöffnungen der Oxidationseinrichtung zu positionieren. Aufgrund der hohen Strömungsgeschwindigkeiten an den Sauerstoffauslaßöffnungen kann ein schnelles Zusetzen der Sauerstoffauslaßöffnungen verhindert werden. Ferner wird durch die Erhöhung der Strömungsgeschwindigkeit die Reaktion innerhalb der Oxidationszone verbessert. Nachteilig ist hingegen der sehr aufwendige Aufbau der Strömungseinbauten.

Es ist eine **Aufgabe** der vorliegenden Erfindung, eine Rauchgasreinigungsvorrichtung zu schaffen, bei der auf derartige Strömungseinbauten verzichtet werden kann, ohne daß die mittels der kleinen Sauerstoffauslaßöffnungen und der Strömungseinbauten verbesserte Reaktion innerhalb der Oxidationszone beeinträchtigt wird.

Diese Aufgabe wird gemäß der vorliegenden Erfindung durch eine Rauchgasreinigungsvorrichtung mit einem Waschflüssigkeitssumpf **geIöst**, der eine Oxidationseinrichtung mit wenigstens einer Rohrleitung und darin vorgesehenen Sauerstoffauslaßöffnungen zur Einleitung von Sauerstoff in den Waschflüssigkeitssumpf und Zirkulationsmittel zum Zirkulieren der im Waschflüssigkeitssumpf vorhandenen Waschflüssigkeit innerhalb des Waschflüssigkeitssumpfes umfaßt. Die Sauerstoffauslaßöffnungen der wenigstens einen Rohrleitung der Oxidationseinrichtung weisen dabei erfindungsgemäß einen Durchmesser von zumindest 9 mm auf. Bevorzugt sind auch 12 mm, weiterhin besonders bevorzugt 15 mm.

Um auf die in der Rauchgasreinigungsvorrichtung gemäß der DE-A-43 29 427 verwendeten Strömungseinbauten verzichten zu können und gleichzeitig ein vorschnelles Zusetzen der Sauerstoffauslaßöffnungen der Oxidationseinrichtung zu verhindern, weisen die Sauerstoffauslaßöffnungen der wenigstens einen Rohrleitung der Oxidationseinrichtung gemäß der vorliegenden Erfindung einen Durchmesser von zumindest 9 mm auf. Bevorzugt sind ferner 12 mm und 15 mm.

Bei einem eierart großen Durchmesser sind die Nachteile, die durch ein Zusetzen entstehen, vernachlässigbar. Nachteilig ist allerdings, daß die Reaktion in der Oxidationszone des Waschflüssigkeitssumpfes im Vergleich zu der bekannten Rauchgasreinigungsvorrichtung wesentlich schlechter ist. Es stellte sich allerdings heraus, daß diese Verschlechterung der Reaktion aufgehoben werden kann, indem Zirkulationsmittel zum Zirkulieren der im Waschflüssigkeitssumpf vorhandenen Waschflüssigkeit innerhalb des Waschflüssigkeitssumpfes angeordnet werden, da sich die durch diese Zirkulationsmittel erzeugten Strömungsgeschwindigkeiten innerhalb des Waschflüssigkeitssumpfes positiv auf die Reaktion innerhalb der Oxidationszone auswirken. Die Zirkulationsmittel weisen im Vergleich zu den Strömungseinbauten einen sehr einfachen Aufbau auf, da sie in der einfachsten Ausführung lediglich aus einer Rohrleitung mit Ein- und Auslaß und einer entsprechenden Pumpe bestehen. Ferner weisen derartige Zirkulationsmittel den Vorteil auf, daß die in dem Waschflüssigkeitssumpf vorhandene Waschflüssigkeit stets gut durchmischt ist und sich keine Ablagerungen am Boden des Waschflüssigkeitssumpfes bilden.

Gemäß einer weiteren Ausgestaltung der vorliegenden Erfindung umfassen die Zirkulationsmittel einen Einlaß, der mit dem oberen Bereich des Waschflüssigkeitssumpfes verbunden ist, Auslaßmittel, die in einem unteren Bereich des Waschflüssigkeitssumpfes angeordnet sind, und eine Pumpe, deren Saugseite mit dem Einlaß und deren Druckseite mit den Auslaßmitteln verbunden sind. Auf diese Weise wird Waschflüssigkeit vom oberen Bereich des Waschflüssigkeitssumpfes in den unteren Bereich gepumpt und somit insbesondere die Waschflüssigkeit im unteren Bereich aufgemischt, so daß keine Ablagerungen von Feststoffen am Boden des Waschflüssigkeitssumpfes zu erwarten sind.

Ferner ist bevorzugt, daß die wenigstens eine Rohrleitung der Oxidationseinrichtung zumindest teilweise auf den Zirkulationsmitteln angeordnet ist, so daß hier auf gesonderte Befestigungsmittel verzichtet werden kann.

Weiterhin weisen die Zirkulationsmittel vorteilhaft eine Dosiereinrichtung zur Beimischung von Additiven in die Waschflüssigkeit auf. Auf diese Weise kann die Zusammensetzung der Waschflüssigkeit innerhalb des Waschturms wunschgemäß eingestellt werden.

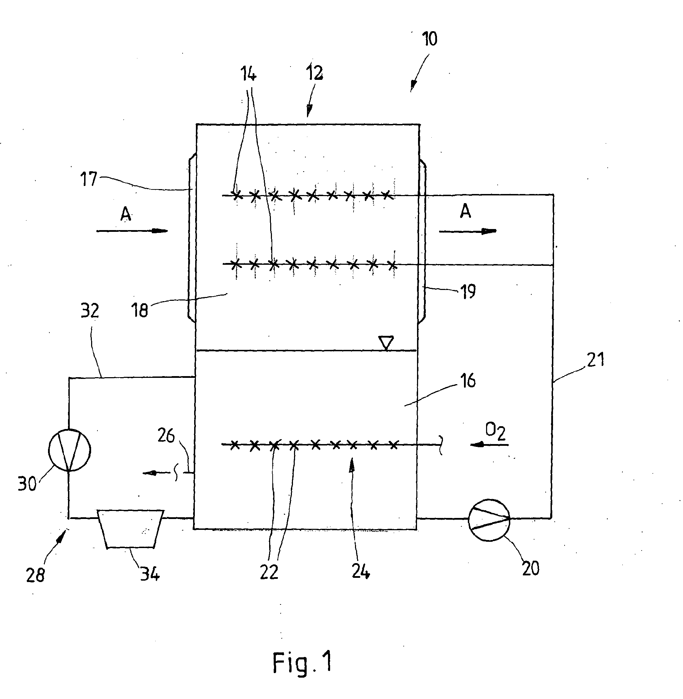

Nachfolgend wird eine bevorzugte Ausführungsform der erfindungsgemäßen Rauchgasreinigungsvorrichtung unter Bezugnahme auf die beiliegende Zeichnung näher erläutert. Diese zeigt eine skizzenhafte Vorderansicht einer Ausführungsform der erfindungsgemäßen Vorrichtung 10 zur Rauchgasreinigung. Bei dem Rauchgas handelt es sich vorzugsweise um Rauchgas eines Kohlekraftwerks oder dergleichen. Die Vorrichtung 10 umfaßt einen Behälter 12, der vorzugsweise quaderförmig ausgebildet ist. In einem oberen Abschnitt des Behälters 12 sind Waschflüssigkeitsdüsen 14 angeordnet, die auf unterschiedlichen Niveaus arrangiert und in unterschiedlichen Richtungen ausgerichtet sein können, beispielsweise horizontal oder vertikal, wobei eine horizontale Ausrichtung der Waschflüssigkeitsdüsen bevorzugt ist. Im unteren Abschnitt des Behälters 12 ist ein Waschflüssigkeitssumpf 16 zur Aufnahme von Waschflüssigkeit vorgesehen. Zwischen den Waschflüssigkeitsdüsen 14 und dem Waschflüssigkeitssumpf 16 umfaßt der Behälter 12 einen Absorptionsbereich 18, in den im Betriebszustand der Vorrichtung 10 zu reinigendes Rauchgas im wesentlichen horizontal und mit im wesentlichen konstanter Geschwindigkeit in Richtung der Pfeile A durch die Einlaßöffnung 17 eingeleitet wird und durch die Auslaßöffnung 19 wieder austritt. Mit Hilfe einer Pumpeinrichtung 20 wird über eine Leitung 21 Waschflüssigkeit aus dem Waschflüssigkeitssumpf 16 zu den Waschflüssigkeitsdüsen 14 gepumpt und von diesen in Form eines feinen Nebels auf das den Absorptionsbereich 18 durchströmende Rauchgas gesprüht. Die in der Waschflüssigkeit enthaltenen Erdalkalien, wie beispielsweise Kalziumcarbonat, reagieren mit den Schwefeloxiden im Rauchgas, wodurch im wesentlichen Kalziumsulfit gebildet wird, das wiederum in der Waschflüssigkeit gebunden ist. Auf diese Weise wird das durch den Absorptionsbereich 18 strömende Rauchgas gereinigt. Die im wesentlichen horizontale Durchströmung des Absorptionsbereiches 18 durch das Rauchgas bringt den Vorteil mit sich, daß eine sehr gleichmäßige Strömung realisierbar ist, die wiederum eine verbesserte Schwefeloxidabscheidung im Absorptionsbereich 18 ermöglicht.

Die den Absorptionsbereich 18 verlassende Waschflüssigkeit, die die Kalziumsulfite enthält, sammelt sich im Waschflüssigkeitssumpf 16 und reagiert dort mit Sauerstoff, der durch Sauerstoffauslaßöffnungen 22 einer in dem Waschflüssigkeitssumpf 16 angeordneten Oxidationseinrichtung 24 in den Waschflüssigkeitssumpf 16 eingeleitet wird. Diese Sauerstoffauslaßöffnungen 22 weisen einen Durchmesser von wenigstens 9 mm auf, also einen Durchmesser, der ausreichend groß ist, daß ein Zusetzen der Sauerstoffauslaßöffnungen 22 vermieden wird. Durch die Reaktion werden die im Waschflüssigkeitssumpf 16 vorhandenen Kalziumsulfite zu Kalziumsulfat oxidiert. Dieses wird schließlich zur Weiterverarbeitung zusammen mit der Waschflüssigkeit über die Austrittsleitung 26 aus dem Waschflüssigkeitssumpf 16 gepumpt.

Um die in der Oxidationszone des Waschflüssigkeitssumpfes 16 stattfindende Reaktion zu verbessern, sind Zirkulierungsmittel 28 vorgesehen, die im wesentlichen eine mit einer Pumpe 30 versehene Leitung 32 umfassen, durch die Waschflüssigkeit vom oberen Bereich des Waschflüssigkeitssumpfes 16 in den unteren Bereich des Waschflüssigkeitssumpfes 16 gepumpt wird. Auf diese Weise entsteht innerhalb des Waschflüssigkeitssumpfes 16 eine Zirkulation der Waschflüssigkeit, was zu einer Verbesserung der Reaktion innerhalb der Oxidationszone führt. Die Zirkulierungsmittel 28 führen ferner dazu, daß keine Feststoffablagerungen am Boden des Behälters 12 auftreten.

Die Zirkulierungsmittel 28 umfassen schließlich eine Dosiereinrichtung 34, mittels derer der durch die Leitung 32 strömenden Waschflüssigkeit Additive beigemischt werden können. Es sei jedoch darauf hingewiesen, daß die Dosiereinrichtung 34 optional ist.

Die Kombination der Oxidationseinrichtung 24, deren Leitungen Sauerstoffauslaßöffnungen 22 mit einem Durchmesser von mehr als 9 mm aufweisen, und der Zirkulierurigsmittel 28, die Waschflüssigkeit innerhalb des Waschflüssigkeitssumpfes 16 zirkulieren, führt zu einer Anordnung innerhalb des Waschflüssigkeitssumpfes 16, bei der auf Strömungseinbauten verzichtet werden kann, wobei ein Zusetzen der Sauerstoffauslaßöffnungen 22 der Oxidationseinrichtung 24 verhindert und eine sehr gute Reaktion innerhalb der Oxidationszone des Waschflüssigkeitssumpfes 16 sichergestellt ist.

Schließlich sei darauf hingewiesen, daß die erfindungsgemäße Vorrichtung auch beispielsweise zur Meerwasserentsalzung, in der Zementindustrie oder allgemein in fossile Brennstoffe verwertenden Kraftwerken eingesetzt werden kann.

Es sollte klar sein, daß die zuvor beschriebene bevorzugte Ausführungsform nicht einschränkend ist, also weitere Modifikationen und Änderungen möglich sind, ohne den durch die beiliegenden Ansprüche definierten Schutzbereich der vorliegenden Erfindung zu verlassen.

### Bezugszeichenliste:

- 10: Vorrichtung A Richtung
- 12: Behälter
- 14: Waschflüssigkeitsdüsen
- 16: Waschflüssigkeitssumpf
- 17: Einlaßöffnung
- 18: Absorptionsbereich
- 19: Auslaßöffnung
- 20: Pumpeinrichtung
- 21: Leitung
- 22: Sauerstoffauslaßöffnung
- 24: Oxidationseinrichtung
- 26: Austrittsleitung
- 28: Zirkulierungsmittel
- 30: Pumpe
- 32: Leitung
- 34: Dosiereinrichtung

## Patentansprüche

1. Rauchgasreinigungsvorrichtung mit einem Waschflüssigkeitssumpf (16), der aufweist:
eine Oxidationseinrichtung (24) mit wenigstens einer Rohrleitung (21) und darin vorgesehenen Sauerstoffauslaßöffnungen (22) zur Einleitung von Sauerstoff in den Waschflüssigkeitssumpf (16) und
Zirkulationsmittel (28) zum Zirkulieren der im Waschflüssigkeitssumpf (16) vorhandenen Waschflüssigkeit innerhalb des Waschflüssigkeitssumpfes (16),
**dadurch gekennzeichnet, daß**
die Sauerstoffauslaßöffnungen (22) der wenigstens einen Rohrleitung (21) der Oxidationseinrichtung (24) einen Durchmesser von zumindest 9 mm aufweisen.

2. Rauchgasreinigungsvorrichtung nach Anspruch 1, wobei die Zirkulationsmittel (28) einen Einlaß, der mit dem oberen Bereich des Waschflüssigkeitssumpfes (16) verbunden ist, Auslaßmittel, die in einem unteren Bereich des Waschflüssigkeitssumpfes (16) angeordnet sind, und eine Pumpe (30) umfassen, deren Saugseite mit dem Einlaß und deren Druckseite mit den Auslaßmitteln verbunden sind.

3. Rauchgasreinigungsvorrichtung nach einem der vorhergehenden Ansprüche, wobei die wenigstens eine Rohleitung der Oxidationseinrichtung (24) zumindest teilweise auf den Zirkulationsmitteln (28) angeordnet ist.

4. Rauchgasreinigungsvorrichtung nach einem der vorhergehenden Ansprüche, wobei die Zirkulationsmittel (28) eine Dosiereinrichtung (34) zur Beimischung von Additiven in die Waschflüssigkeit aufweisen.
